# EUROPEAN PATENT SPECIFICATION

(11) **EP 2 276 950 B1**
(45) Date of publication and mention of the grant of the patent: **20.06.2012**
(21) Application number: 09734391.7
(22) Date of filing: 24.04.2009
(51) Int. Cl.: F16J 15/08, F16J 15/12, F01N 13/18

(54) **METALLIC FLAT GASKET**
METALLISCHE FLACHDICHTUNG
JOINT PLAT MÉTALLIQUE

(30) Priority: 24.04.2008 DE 202008005712 U
(43) Date of publication of application: 26.01.2011
(73) Proprietor: REINZ-Dichtungs-GmbH, 89233 Neu-Ulm (DE)
(72) Inventor: HOEHE, Kurt, 89129 Langenau (DE); HIDA, Tetsuya, Yokohama (JP); TAHARA, Eiichi, Atsugi (JP); WALDVOGEL, Johann, 86381 Krumbach (DE); SCHNEIDER, Juergen, 89188 Merklingen (DE); WEISS, Alfred, 89231 Neu-Ulm (DE)
(74) Representative: Tomerius, Isabel
(86) International application number: PCT/EP2009/003020
(87) International publication number: WO 2009/130044

(56) References cited:
- CA-A1- 2 570 702
- DE-A1-102004 018 344
- GB-A- 1 567 407
- JP-A- 61 014 452
- JP-A- 2004 144 119
- US-A- 4 203 608
- US-A- 4 964 293
- US-A1- 2005 173 868
- US-A1- 2007 013 145

## Description

The invention relates to a metallic flat gasket for sealing at least two subjects against each other and comprises at least one through opening, which is surrounded by a sealing element. The metallic flat gasket consists of at least one metallic layer, which is completely coated at least in the area of its sealing element on at least one of its surfaces. The sealing element is formed as a periodic structuring from the material of the first gasket layer, with the periodic structure comprising elevations, depressions and transition regions between depressions and elevations. The periodic structure comprises at least two periods of the structuring. The period length of the periodic structuring corresponds at the most to the four-fold sheet thickness of the gasket layer.

Such gaskets are in principle already known from the state of the art. For example, DE 103 10 124 describes a metallic flat gasket, in which at least one through opening is sealed by a concentric arrangement of periodically alternating elevations and depressions which are formed in the gasket layer itself. GB 1567 407 also relates to a metallic gashet, whereby the periodically alternating elevations and depressions are provided with a coating layer.

From EP 1 298 364 A2, periodic structures are known which extend either as a meandering bead around the through opening or which consist of short bead-shaped elevations and depressions extending in radial direction which encircle the through opening like rays of light. Further, EP 1 298 364 A2 discloses cup-shaped elevations and depressions which alternate with each other and which together form a honey-comb like structure.

Moreover, the later published patent application with publication number EP2 088 305 (application number EP 08002192) by the applicant discloses sealing elements which consist of concentrical elevations and depressions that alternate periodically, with the periodic structure being overlapped by an arch-shaped structure.

These sealing elements as such are used to macroscopically seal the through-opening. Compared to beads, they are advantageous as they form multiple sealing lines. In order to ascertain an optimal sealing, they are supplemented by a microscopic sealing formed by a coating in the area of the macroscopic sealing element.

In the state of the art, such a coating is usually applied to the structured areas after the elevations and depressions have been formed. However, as is known for beads e.g. from EP 1 079 155 A2, this leads to a situation where - compared to the elevated portions - a considerably larger amount of coating is applied to the recessed area. This behaviour is even more true for the above described structures which consist not only in a single depression or elevation. As a consequence, the total structure shows a non-regular distribution of the coating and therefore possesses only a reduced sealing potential.

In general, it is further known to use completely precoated sealing materials or partially precoated sealing materials. However, while it is still possible to emboss a bead into such a material, it has been shown that it is not possible to emboss more filigree structures, such as periodic sealing elements having a period length that does not exceed four times the sheet thickness, with sufficient reproducibly. The reason for this is that commonly used coating materials flow during the embossment of the elevations and depressions so that they are shifted in an uncontrollable manner.

Accordingly, it is the object of the invention to provide a metallic flat gasket into which at least one periodically shaped sealing element with a period length corresponding at the most to four times the thickness of the metal sheet, is formed and where at least one of the surfaces of the gasket is completely coated at least in the area of the sealing element with an extremely regular coating thickness. The gasket can be produced in a simple and cost-saving manner. It can be adapted easily to a large variety of counter surfaces to be sealed.

This object is achieved with a metallic flat gasket according to claim 1. Preferred embodiments are described in the dependent claims. This object is further achieved with a method for the production of a metallic flat gasket according to claim 20.

The invention thus relates to a metallic flat gasket with at least one metallic layer that on at least one of its surfaces is coated, with a through opening formed in the gasket layer, the through opening being completely surrounded by a sealing element that is formed as a periodic structuring into the material of the gasket layer, with the periodic structure comprising elevations, depressions and transition regions between the elevations and depressions. The periodic structure comprises at least two periods and shows a periodic length that is at the most four times the thickness of the metal sheet of the first gasket layer. This provides that the sealing element is much more filigree compared to a full bead. For a full bead, the ratio of bead width to thickness of the metal sheet is at least 7, preferably at least 8. The period length is derived from a sinus-shaped undulation, which consists in elevations, depressions and transition regions between them. Considering such a sinus-shaped undulation, a period corresponds to 360°. On the other hand, the width of a bead is measured between its foot points. The structure also leads to the consequence that the sealing element formed by the periodic structure compared to the beads common in the state of the art does not only lead to a better sealing but at the same time also provides for an inherent stiffness, which improves its durability.

In spite of the fine structure, the inventors achieved to manufacture a gasket that in the area of the sealing element has a coating with an extremely regular coating thickness, which would not be possible with the coatings used up to now which flow at room temperature. No flowing of the coating material has been observed here. By use of coatings that do not flow at room temperature, it is ascertained that the thickness of the coating in the area of the structuring alters only as little as to provide a coating thickness in the area of the depressions which has a thickness of less than 120 %, preferably less than 110 % of the thickness of the coating in the area of the protrusions or the unstructured areas. It is most preferred that the coating thickness in the area of the depressions is essentially the same as in the area of the protrusions and in the unstructured area, respectively.

The flowing behaviour is determined by the following method: A round stamp with a surface area of 450 mm² is put on a non-structured area of the coated metal sheet at room temperature and the load deflection curved is measured for a load pressure of up to 150 N/mm². The round stamp does not have to be circular but may be oval as well given that its longest extension is at the most twice its shortest extension. The coating thickness after treatment is determined as the intersection point between the line of no pressure and the relaxation line starting at 150 N/mm². Coatings with an initial thickness of 35 µm have been considered, the respective gaskets were coated on only one surface. In case of two-sided coated gasket material, the coating on the other side has been removed before the measurement. For coatings according to the state of the art, the coating thickness was decreased by at least 4 µm, in some cases even by more than 4.5 µm. In contrast, the thickness of those coatings which allow the filigree structure to be reliably embossed showed a considerably less altering. The intersection point of their relaxation curve with the line of no pressure amounts to less than 3.0 µm, for most materials to less than 2.5 µm and for some materials even to only 1.5 µm. These thicknesses have been measured with a high reproducibility. General experience teaches that the values measured can be linearly extrapolated within an area of 15 to 40 µm initial coating thickness, meaning that for a coating according to the state of the art and a coating thickness of 17.5 µm, an altering of at least 2 µm can be observed. It should be stressed that these values do only apply if the sheet thickness of the steel sheet varies between 0.15 and 0.30 mm.

Thus, a coating is considered as being non-flowing if its initial coating thickness of 35 µm under the conditions described above is altered by less than 3.0 µm, preferably by less than 2.5 µm, or if the coating thickness x deviates from x₀ =35 µm but amounts to 15 to 40 µm, is altered by less than 3.0 µm multiplied by the ratio x/x₀.

The coating may be a coating that is partially applied before the embossment of the periodic structure in the region of the sealing elements, only. It is however more preferred that the corresponding gasket layer be produced from a metal sheet that is completely coated on at least one of its surfaces. This allows the use of so-called coil coated metal sheets. In special applications, the coating of a coil coated metal sheet can even be removed if it is necessary that critical areas, such as the coolant contact areas in open-deck engines, be free of coating.

If the coating material is considered independent of the metal sheet, this coating material shows a hardness of more than 90 Shore A.

The fine structuring of the metallic flat gasket with a period length of less than the four-fold of the sheet thickness results in a considerable deformation and strain of the gasket layer in the area of the structuring. The total strain ε (see Tabellenbuch Metall, Europa Lehrmittel, Wuppertal, 1987, p. 138), thus the plastic and the almost negligible elastic portion together amount to at least 30 %, preferably at least 35 % and most preferably to at least 40 %. This value is much larger than the value for beads common in the state of the art, which show a deformation of about 20 % -25 %.

The particular sealing properties of the sealing element according to the invention are further improved by a deliberate reduction of the material thickness of the metal sheet in the area of the periodic structuring, namely in the transition region between a protrusion and the adjacent depression. A modest reduction of the thickness of the metal sheet by 8 to 30 %, preferably by 15 to 26 % in the transition area relative to the material thickness in the area of the depression and protrusion, respectively, contributes to the balance between the elastic properties of the sealing element and its durability.

The elastic properties also result from the use of a spring steel, a spring-hard steel or a hardened steel, thus a steel with a tensile strength of at least 1100 N/mm², preferably at least 1300 N/ mm². Whether a stainless steel or a carbon steel is used depends on the corrosion risk of the particular gasket. The choice may however also be influenced by the properties of the coating and its thickness.

The coating is a coating with a polymer-based binder, usually a FPM or a NBR binder. The portion of the elastomer is higher than 50 %, preferably higher than 65 %. The coating is no metallic coating such as galvanizing, e.g. using Zn. In spite of its small disposition to flow, the coating is different from such coatings which are usually referred to as hard coating and which are used as deformation limiter for elastic sealing elements or as support elements in a partial manner on a gasket surface. Hard coating to a large percentage contain thermosets, while in the coatings used for the invention, thermosets are only present to less than 5 %, preferably less than 3 %.

As to the geometric design of the periodic structure, there exist several opportunities. In a first embodiment, the protrusions and depressions are arranged essentially concentric around the at least one through opening. They form an undulating structure, the section of which is shaped like a sinus wave or formed from trapezoidal elements. Intermediate forms are possible as well. In order to obtain a sufficient width with a trapezoidal shape, no rectangular geometry should be used, thus no horizontally ascending transition regions between depressions and protrusions. The transition region should be oriented in such a way that it forms an angle of between 30° and 80° relative to the plane of the gasket layer. The wave-shaped periodic structuring in a preferred embodiment may be superposed by an arch-shaped structure. In general, in the design of the structuring it is of course possible that the structuring varies in its circumferential or radial direction with respect to distance between adjacent protrusions (or elevations, respectively), height of the protrusions and/or depressions and/or degree of reduction of thickness of the metal sheet in the transition region between depression and protrusion. Further, the number of periods of the structuring may vary in the circumferential direction. All these factors allow for an adaptation of the sealing elements of the gasket to the stiffness distribution in the parts to be sealed as well as to the location of the mounting elements relative to the stiffness distribution.

In a further embodiment, the sealing element is formed by a protrusion that extends like a meander around the through opening. The periodic structure of the protrusions and depressions is given in a direction circumferential to the through opening. Thus, in a sectional view taken at the structuring on a curved line which concentrically circumvents the through opening, protrusion, transition region and depression follow each other. Thus, other than for the earlier mentioned embodiment, the direction of period is given in the circumferential direction. Again, factors such as height or period length can be varied in the circumferential or radial direction.

It is a common property of the embodiments mentioned thus far that they provide for a sufficient sealing potential without an additional sealing bead. Nevertheless, it is possible to combine the sealing element formed from periodic structures with a bead. If the sealing element is combined with a bead, it is both possible that the periodic sealing element is more or less remote from the respective through opening than the bead. In some cases it can be advantageous that a periodic structure on both sides is neighbouring a bead.

The periodic structuring may also consist in elevations and depressions that form radially extending bead-shaped sections which as a whole are arranged like the rays of light around the through opening, with the length of the bead-shaped sections being at least five times their period length. Here, the ratio between period length and material thickness is measured at the smallest diameter, thus closest to the through-opening. In a further embodiment of the invention, the depressions and protrusions are formed cup-like and as a whole form a chess-board or honey-comb pattern. In order to improve the macroscopic sealing performance, an at least one-sided bead-shaped protrusion may run concentrically through the pattern, e.g. at its inner or outer end or at a different position in its course, with the bead-shaped protrusion completely surrounding the through-opening. Especially for the two last mentioned embodiments it may be advantageous that the height of the protrusions is different from the height of the depressions - both measured relative to the surface of the gasket layer in the unstructured area. These two embodiments are preferably used in connection with an additional sealing bead.

The particular conditions with respect to space in a particular gasket can make it necessary that for instance in the web area between two through openings, each of which is sealed by a sealing element according to the invention, the sealing elements of the adjacent through openings are brought together in such a manner that the number of protrusions and depression measured along the connection line of the center points of the through openings is reduced compared to the number outside the web area. If an additional or a superposed bead is present as sealing element, it is even possible to completely dispense of a periodic structuring that runs through the web area. If the sealing element is accompanied by a bead, it is possible that the periodic sealing element encircles the through opening only at least 70 %, preferably at least 80 %, of its perimeter and leaves out the web area. In those cases where the periodic sealing element is not accompanied by a bead, it is necessary that all through openings of the main kind, usually the combustion gas through openings, be either together or separately circumvented by a periodic structuring of at least two periods.

As is known in general from the state of the art, the metallic gasket according to the invention may contain several gasket layers. It is then also possible that several, especially two, gasket layers are partially or completely coated on at least one of their surfaces and that several gasket layers contain sealing elements.

The term metallic flat gasket according to this invention includes gaskets which, apart from the elevations and depressions of the sealing element and of optional support elements, are completely flat, but it also includes gaskets which extend in a flat manner but - since the parts to be sealed have conic or spherical surfaces - show a conic or spherical shape themselves. These gaskets are considered as flat gaskets if their longitudinal and transversal extension is considerably larger than its thickness (due to the conic or spherical shape), namely at least five times, preferably at least ten times, as large as its thickness.

The metallic flat gasket according to the invention is especially used for sealing in the area of combustion engines including the exhaust line, especially as cylinder head gasket, exhaust manifold gasket or flange gasket. The metallic flat gasket according to the invention comprises through-openings for media, especially for combustion gases, but also for mounting elements. The through openings for combustion gases are usually either sealed individually or in a combined manner using sealing elements that are connected to each other in a spectacle-shaped way. Other through openings for media are often sealed jointly. Through openings for fastening means are at least sealed off if they serve as media holes as well. The periodic structuring according to the invention is used as sealing element. It is however also possible that near the outer edge of the gasket or at a position at which the parts to be sealed show a structural weakness, comparable structures are formed in the gasket which then serve as support elements. What is aforementioned with respect to the coating of the sealing elements is valid for the coating of these support elements, too.

The metallic flat gasket is produced using either a coil-coated material or a partially coated material by embossing the periodic structuring into the coated material. Due to the non-flowing of the coating material, gaskets with reproducible periodic structures are obtained which provide for an excellent sealing.

The invention will be described hereinafter with reference to the drawings. These drawings merely illustrate, purely by way of example, certain preferred configurations of the invention, without the invention being restricted to the described examples. The drawings show:
- Figure 1: a partial top view of a metallic flat gasket according to the invention on the example of a cylinder head gasket;
- Figure 2: a cross section comparable to line A-A in figure 1, for a flat gasket according to the state of the art;

- Figure 3: a cross section corresponding to line A-A in figure 1 for a metallic flat gasket according to the invention;
- Figure 4: a partial top view on a metallic flat gasket according to the invention on the example of an exhaust manifold gasket;
- Figure 5: a cross section corresponding to line C-C of figure 4;
- Figure 6: a section of a cross section of a further embodiment of a sealing element of a metallic flat gasket according to the invention;
- Figure 7: a partial top view of a metallic flat gasket according to the invention;
- Figure 8: a cross section corresponding to line B-B in figure 1 for a metallic gasket according to the invention;
- Figure 9: another cross section comparable to line B-B in figure 1 for a metallic gasket according to the invention;
- Figure 10 a: partial top view of a further embodiment of a sealing element of a metallic flat gasket according to the invention comparable to area X in figure 4; and
- Figure 11: in two different presentations the load deflection curves for the gasket material (1-sided coated) in a region without any sealing element.

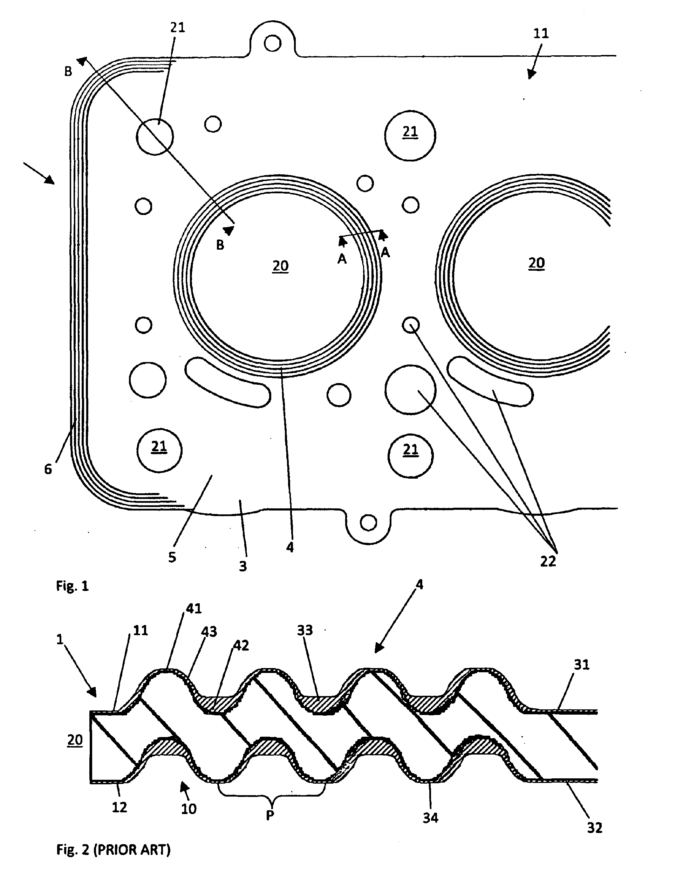

Figure 1 shows a partial view of a metallic flat gasket 1 according to the invention on the example of a cylinder head gasket. Apart from the through openings for the combustion gases 20, the gasket shows further through openings, especially through openings for fastening means 21 as well as through openings for media (cooling water, oil). All combustion gas openings 20 are individually and completely surrounded by a sealing element 4, which consists of several protrusions and depressions which are concentrically arranged with the protrusions and depressions periodically alternating. The lateral edge of the gasket shows a support element 6, which partially borders the unstructured area 5 of the gasket. The support element is formed by a periodic structuring with protrusions and depressions, too. The gasket on its whole surface 11 including the sealing and support elements shows a coating 3 with a regular thickness.

With a sectional view comparable to the section A-A in figure 1 but in a gasket of the state of the art, figure 2 demonstrates a coating profile as is usually obtained when the coating is applied after the formation of the protrusions 41 and depressions 42 separately on both surfaces. While in the depressions 42, an accumulation 33 of the coating material takes place, since it accumulates in the depressions 42, the thickness of the coating in the area of the protrusions 41 is reduced, as can be seen at 34. As a consequence, the gasket shows a non-regular distribution of the coating, which results in a reduced sealing potential.

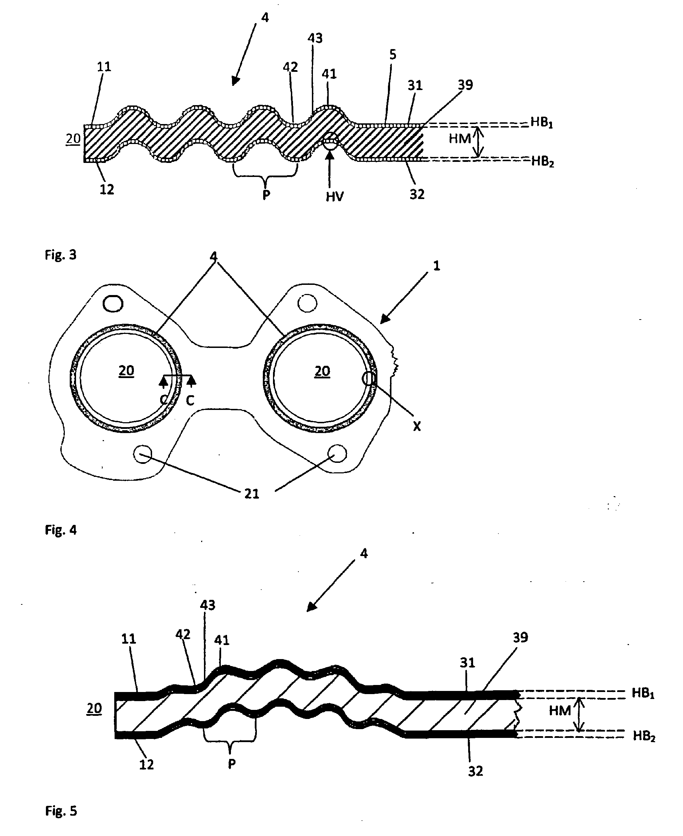

In contrast to this, figure 3 shows a corresponding section along line A-A in figure 1 but in a metallic flat gasket according to the invention. The gasket is coated on both surfaces with the same coating thickness HB₁, HB₂ at least in the section represented. Even in the area of the protrusions 41, depressions 42 and the transition region 43 between them, the thickness of the coating is only altered insignificantly. The thickness of the coating in a depression, HV, is at the most 120 %, preferably at the most 110 % of the coating thickness HB on the corresponding surface of the gasket 1 in the unstructured area which should be measured, if the coating extends thus far at a distance of at least 3 mm to the end of the periodic structuring. In some cases, the coating thickness in a depression HV is even identical to the coating thickness HB on the corresponding surface in the unstructured area. The protrusions 41 and the depressions 42 provide a periodic structure, which in its course is similar to a sinusoidal wave. The period length P of this structuring in the sealing element 4 shown is considerably less than four times the thickness of the metal sheet 39, HM, of the gasket layer 10.

On the example of an exhaust manifold gasket, which often, and also in the case depicted, in the regions between their combustion gas through openings 20, is less broad than in the regions of the combustion gas through openings 20, figure 4 shows that the sealing elements 4 surrounding the combustion chamber openings 20 do not always need to be situated in the immediate neighbourhood of these openings but may be offset. The section along line C-C is depicted in figure 5. Again, the one-layered gasket 1 in the whole area represented, on both surfaces 11 and 12 shows a coating 31, 32 with comparable thickness HB₁, HB₂. As in the foregoing embodiment of the invention, the period length P of the protrusions 41 and the depressions 42 of the sealing element 4 is considerably smaller than four times the thickness of the metal sheet 39, HM. The embodiment of figure 5 mainly distinguishes from the one in figure 3 by an arc shape that is superposed to the periodic structure. This superposition leads to an optimization of the elastic properties and the durability of the sealing element 4.

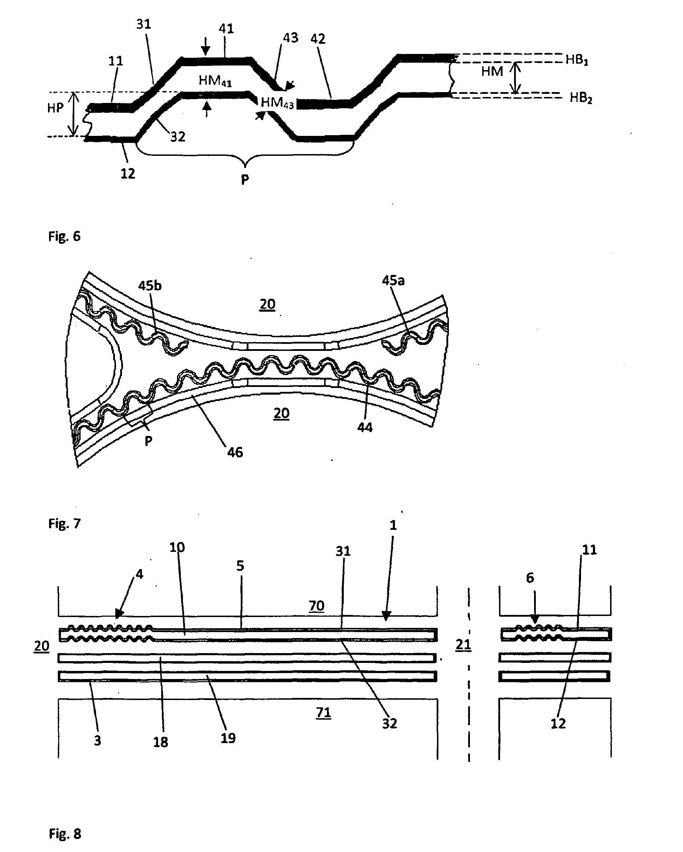

Figure 6 demonstrates the proportions within a sealing element 4 of a metallic flat gasket 1 according to the invention, here on the example of a structuring with a trapezoidal cross section. The thickness of the coating on the first surface 11 is slightly larger than the one (32) on the other surface 12. The thickness of the coatings HB₁, HB₂ remains essentially constant over their entire course, respectively, thus in the depressions 42 as well as at the protrusions 41 and in the transition areas 43. In the transition area 43 between protrusion 41 and depression 42 the structure shows a thickness of the metal sheet 39, HM₄₃, which is thinner compared to the thickness in the area of the protrusion 41, HM₄₁. This reduction of thickness provides for a hardening of the transition area 43 and of the sealing element 4 as a whole. The reduction amounts to between 8 and 30 %, preferably to between 15 and 26 %. This does however not affect the thickness of the coating. It should be stressed that such a reduction is not only observed with trapezoidal cross-sections, but with more rounded and/or sinus-shaped ones as well. Figure 6 further demonstrates that the embossment depth of the periodic structure, HP, can be larger than the thickness of the metal sheet, HM.

In a top view to a section of a metallic gasket with several through openings, figure 7 depicts an exemplary course of the sealing elements in the web area between two through openings 20. In the example shown, the sealing element 44, 45a, 45b consists in a periodically meandering protrusion, which extends around the through opening 20. A period P here other than in the foregoing examples does not extend radially to the through opening but circumferentially. The period length is determined in the middle of the radial extension of the structuring. The sealing element 44, which extends along the combustion gas through opening shown in the lower part of the figure completely surrounds this through opening. In contrast to this, the sealing element 45 in the web area is discontinuous and divided into two segments 45a, 45b, which do not extend through the web area due to lack of space. Other than might be assumed from the spacious drawing, in a real gasket the sealing elements 44, 45a and 45b come that close to each other that a seamless transition is given so that the uninterrupted sealing element 44 provides for a sufficient sealing of both combustion gas through openings 20.

In addition to this, figure 7 indicates that the meandering sealing elements 44, 45a, 45b may be accompanied by an additional bead 46. In the same way as for meandering sealing elements, it is also possible that for a concentrically extending periodic sealing element the number of periods is reduced in the web area or that the sealing elements of two neighbouring sealing elements are brought together.

The metallic flat gasket 1 according to the invention apart from the gasket layer 10, which contains the sealing element 4, may contain further gasket layers, as becomes obvious from figure 8, e.g. two further gasket layers, which as such may be unstructured layers 18, 19, as shown, or may themselves contain beads or periodic structures as sealing or supporting elements. In the example shown, which follows the section B-B in figure 1, in addition to the first gasket layer 10, which is completely coated on both surfaces with coatings 31 and 32, respectively, the lowest gasket layer 19 pointing to the engine block 71 is coated on one surface as well. The figure demonstrates how regularly the coatings 31, 32 extend on both surfaces 11, 12 of the first gasket layer 10 from the combustion gas through opening 20 via the sealing element 4, the unstructured area 5 and - on the other side of the opening - for fastening means 21 via the support element 6 to the outer edge of the gasket.

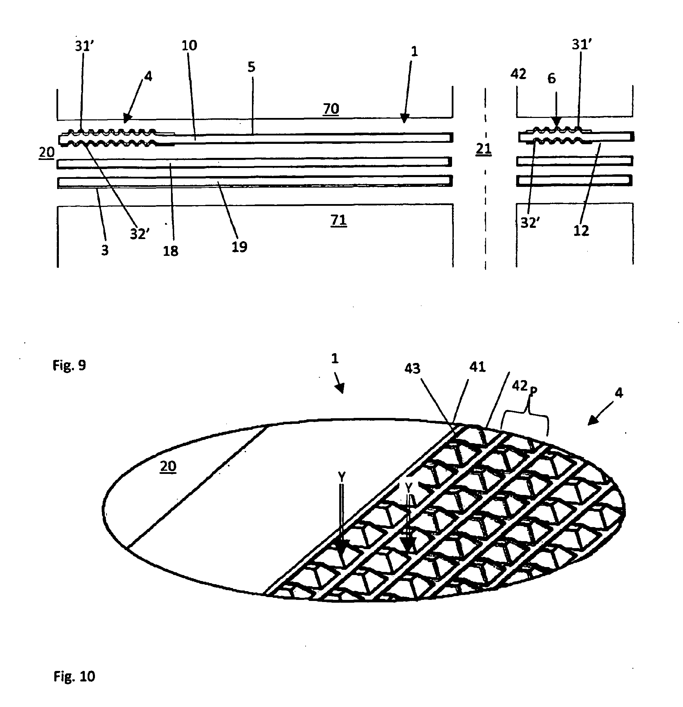

Figure 9 represents a modification of the gasket section shown in figure 8. While in figure 8, the coatings 31 and 32, respectively, are complete coatings of gasket layer 10, here the upper gasket layer 10 is partially coated with coatings 31' and 32' in the area of the sealing elements 4 and the support elements 6 and their neighbourhood, only. Here again, the gasket is characterized by a periodic structuring with a very regular coating thickness.

Figure 10 shows a further embodiment of the metallic flat gasket according to the invention on the example of a section of an inclined top view to a periodic structure of a sealing element 4, as can for instance surround the through opening 20 at a position comparable to area X in figure 4. A large amount of protrusions 41 and depressions 42 extend along the circumference of the through opening and both in the radial and the circumferential direction they show a periodic structure, which reminds of truncated pyramids. Instead of the orthogonal arrangement shown, a non-orthogonal arrangement is preferred for surrounding round through-openings. Namely a kind of polar arrangement, in which the number of circumferential periods does not change in radial direction, thus where in a circumferential direction at least one of depressions and protrusions become wider with an increasing distance from the through opening. In spite of the extremely fine structuring even here an extremely regular coating is possible; section Y-Y corresponds approximately to the cross section of figure 6.

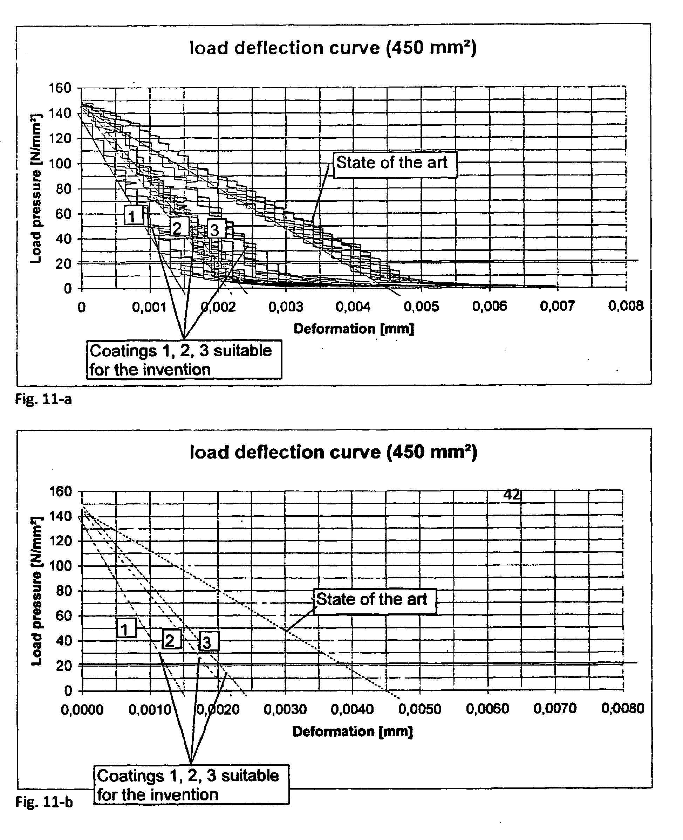

Figures 11-a and 11-b demonstrate how the flowing behaviour of the coatings is measured. Both curves are normalized to a deformation of zero at a pressure of 150 N/mm². A 450 mm² large circular or oval stamp is put on the coated gasket material at an area outside the periodic structure. The stamp is alternatingly put under pressure and relaxed with the pressure increasing in each cycle. The maximum pressure considered here is 150 N/mm². A tangent is constructed to the last relaxation branch considering the most left point of the first bulge as well as the most left point of the last bulge above 20 N/mm². The straight line is thus constructed comparable to the determination of an E modulus. Values lower than 20 N/mm² shall not be considered for this construction since in this region, the influence of the measurement apparatus prevails over the influence of the coating material itself. The intersection point of this straight relaxation line with the line of no pressure load determines the alteration of the coating due to compression. In Figure 11-a four measurement curves for pressure load and relaxation are given as well as the corresponding interpolated straight lines (relaxation lines). For the coating material according to the state of the art, it is obvious, that it behaves quite differently than the other materials. In Figure 11-b, the interpolated straight lines are shown separately. While the coating according to the state of the art intersects at a thickness of 4.5 µm, the coatings suitable for the invention show intersection points between 1.4 and 2.4 µm, thus they do not flow. Considering these values, it is defined that alterations of the coating of up to 3.0 µm under the conditions described characterize coatings which are suitable to be used in the invention, thus coatings which do not flow. It should be mentioned that both the coating according to the state of the art as well as coatings 1 and 2 are FPM-based coatings. Even with an NBR-based coating as coating 3, a reduced flowing behaviour can be achieved. It should further be stressed that these values do only apply if the sheet thickness of the steel sheet varies between 0.15 and 0.30 mm. While within this thickness range for the metal sheet, this thickness value is not expected to significantly influence the flowing behaviour, the thickness of the coating itself must be taken into consideration. In a range between 15 and 40 µm coating thickness, a linear behaviour can be assumed. This means that with a coating thickness of 17.5 µm, an alteration of the coating thickness of up to 1.5 µm is admissible in order for the coating being considered as non-flowing. The values mentioned are values for one-sided coatings. In case the gasket material is coated on both surfaces, it is necessary to remove the coating on one surface, respectively, and consider the coating behaviour on both surfaces separately. In case a gasket considered does not comprise a self-contained, non-structured area which allows to apply a circular or oval stamp of 450 mm² with the oval being at the most twice as long as broad, it is also possible for measuring purposes to combine it from several pieces provided that coating and metal sheet are cut flush.

## Claims

1. Metallic flat gasket (1) with
- at least one metallic layer (10),
- at least one through opening (20), and
- a sealing element (4) formed in a first one of the at least one gasket layer (10),
- with the sealing element (4) completely surrounding the through-opening (20) and being formed as a periodic structuring in the material of the gasket layer (10),
- where the periodic structuring comprises protrusions (41), depressions (42) and transition regions (43) between the protrusions (41) and depressions (42) and comprises at least two periods for at least 70 % of the circumference of the through-opening (20), - where the first gasket layer (10) is completely coated at least in the area of the periodic structure, and **characterised in that** the period length (P) of the periodic structuring corresponds at the most to four times the material thickness of the first gasket layer (10), wherein the coating contains thermosets to less than 5 %,
- where the thickness of the coating (3) in the region of the sealing element (4) varies only to such an extent that in the area of the depressions (42) it shows a coating thickness (HV) which is less than 120 % of the coating thickness in the area of the protrusions (41),
- where the thickness (HB₁, HB₂) of the coating (3) in the non-structured area at room temperature does not flow,
- and wherein the metallic flat gasket (1) is obtainable using either coil-coated material or partially coated material by embossing the periodic structuring into the coil-coated or partially coated material.

2. Metallic flat gasket (1) according to claim 1, **characterized in that** the thickness of the coating (3) in the region of the sealing element (4) varies only to such an extent that in the area of the depressions (42) it shows a coating thickness (HV) which is less than 110 %, preferably less than 105 % and most preferably less than 102 % of the coating thickness in the area of the protrusions (41).

3. Metallic flat gasket (1) according to one of the preceding claims, **characterized in that** the thickness (HB₁, HB₂) of the coating (3) on one of the surfaces (11, 12) of a gasket layer (10) amounts to 15 to 40 µm.

4. Metallic flat gasket (1) according to one of the preceding claims, **characterized in that** the periodic structure comprises at least two periods for at least 80 % of the circumference of the through-opening (20), preferably for the complete circumference of the through-opening (20).

5. Metallic flat gasket (1) according to one of the preceding claims, **characterized in that** the first gasket layer (10)
- is coated on one of its surfaces (11, 12) only, or
- is coated on both surfaces (11, 12) with identical coating thickness (HB₁, HB₂), or
- is coated on both surfaces (11, 12) with different coating thickness (HB₁, HB₂).

6. Metallic flat gasket (1) according to one of the preceding claims, **characterized in that** the first gasket layer (10) is completely coated on at least one of its surfaces (11, 12) or is only partially coated on at least one of its surfaces (11, 12).

7. Metallic flat gasket (1) according to one of the preceding claims, **characterized in that** the periodic structure comprises at least two periods of a wave over the entire circumference of a through-opening (20).

8. Metallic flat gasket (1) according to one of the preceding claims, **characterized in that** the total strain of the metallic gasket layer (10) in the area of the periodic structuring is at least 30 %, preferably at least 35 % and especially preferably at least 40 %.

9. Metallic flat gasket (1) according to one of the preceding claims, **characterized in that** the periodic structuring is formed in such a way that the thickness (HM₄₃) of the metal sheet (10) in the transition region (43) between a protrusion (41) and an adjacent depression (42) compared to the thickness (HM₄₁) at the protrusion (41) or depression (42) is reduced, preferably the thickness (HM₄₃) of the metal sheet (10) of all transition regions (43) is reduced compared to the thickness (HM₄₁) at a protrusion (41) or a depression (42), and especially preferably the thickness (HM₄₃) of the metal sheet (10) in the at least one transition region (43) between a protrusion (41) and an adjacent depression (42) is reduced by at last 8 %, preferably by at last 10 % and especially preferably by at last 13 % and most preferably by at last 15 %.

10. Metallic flat gasket (1) according to one of the preceding claims, **characterized in that** the first gasket layer (10) is formed from spring steel, spring-hard steel or hardened steel, from carbon steel, or from stainless steel.

11. Metallic flat gasket (1) according to one of the preceding claims, **characterized in that** the coating (3) has at least one of the following characteristics:
- the coating material in an insulated state has a Shore hardness of A 90 or more,
- contains a binder, with the binder containing elastomeric FPM and/or NBR to at least 50 %, preferably to at least 65 %,
- at a temperature up to 180 °C, preferably at a temperature up to 240 °C, durably shows no decomposition,
- contains thermosets to less than 3 %.

12. Metallic flat gasket (1) according to one of the preceding claims, **characterized in that** the protrusions (41) and depressions (42) are essentially arranged concentrically around the at last one through opening (20), wherein preferably the periodic structure of the concentrically arranged protrusions (41) and depressions (42) are superposed by an arc-shaped structure, and wherein most preferably in the periodic structure at least one of the following properties alters in the radial (a to c) and/or the concentrical (a to d) direction:
(a) The distance between neighboring protrusions (41) and/or depressions (42);
(b) The height of the protrusions (41) and/or depressions (42);
(c) The degree of the reduction of the thickness (HM₄₃) of the metal sheet (10) in the transition region (43) between protrusion (41) and adjacent depression (42);
(d) The number of periods.

13. Metallic flat gasket (1) according to one of claims 1 to 11, **characterized in that** the protrusions (41) and depressions (42)
- are formed with a meandering curse around the through opening (20)
- are formed as radially extending bead-shaped structures, the period length of which in the radial direction is at the most five times their period length (P), or
- are formed cup-shaped and in total form a chess-board or honey-comb pattern.

14. Metallic flat gasket (1) according to one of the preceding claims, **characterized by** the periodic structuring being the only sealing element (4) extending concentrically around the through opening (20).

15. Metallic flat gasket (1) according to claim 13 or 14, **characterized in that** the height of the depressions is different to the height (HP) of the protrusions (41) relative to the surfaces (11, 12) of the gasket (10) in the unstructured area.

16. Metallic flat gasket (1) according to one of the preceding claims, **characterized in that** it contains several gasket layers (10, 18, 19), preferably at last two gasket layers which are at least coated in the area of the periodic structuring on at least one of their surfaces (11, 12).

17. Metallic flat gasket (1) according to one of the preceding claims, **characterized in that** it extends flat but as a whole shows a conic or spherical shape.

18. Metallic flat gasket (1) according to one of the preceding claims, **characterized in that** the gasket (1) contains a further periodic structuring, which does not surround a single individual through opening (20), with this further periodic structuring having preferably at least one of a reduced height of a protrusion (41) and/or depression (42) and an increased distance between neighboring protrusions (41) and/or depressions (42) and a reduced reduction of the thickness of the metal sheet (10) in the transition area compared to the periodic structuring that surrounds the through opening (20).

19. Metallic flat gasket (1) according to one of the preceding claims, namely gasket in the area of a combustion engine or its exhaust line, especially cylinder head gasket, exhaust manifold gasket or flange gasket.

20. Method for the production of a metallic flat gasket (1) according to one of the preceding claims, **characterized in that** the periodic structuring is embossed into an area of the at least one gasket layer (10) which is completely coated.

## Patentansprüche

1. Metallische Flachdichtung (1) mit
- mindestens einer metallischen Lage (10)
- mindestens einer Durchgangsöffnung (20), und
- einem Dichtelement (4), das in einer ersten der mindestens einen Dichtungslage (10) ausgebildet ist,
- wobei das Dichtelement (4) die Durchgangsöffnung (20) vollständig umgibt und als periodische Strukturierung im Material der Dichtungslage (10) ausgebildet ist,
- wobei die periodische Strukturierung Vorsprünge (41) und Vertiefungen (42) sowie Übergangsbereiche (43) zwischen den Vorsprüngen (41) und den Vertiefungen (42) aufweist und mindestens zwei Perioden über mindestens 70% des Umfangs der Durchgangsöffnung (20) aufweist, und
- die erste Dichtungslage (10) zumindest im Bereich der periodischen Strukturierung vollständig beschichtet ist,
**dadurch gekennzeichnet, dass**
- die Periodenlänge (P) der periodischen Strukturierung maximal dem Vierfachen der Materialdicke der ersten Dichtungslage (10) entspricht,
- die Beschichtung Duroplasten zu weniger als 5% enthält,
- die Dicke der Beschichtung (3) im Bereich des Dichtelements (4) nur in dem Ausmaß variiert, dass sie im Bereich der Vertiefungen (42) eine Beschichtungsdicke (HV) aufweist, die geringer ist als 120% der Beschichtungsdicke im Bereich der Vorsprünge (41),
- die Dicke der Beschichtung im nicht-strukturierten Bereich bei Raumtemperatur nicht fließt und
- die metallische Flachdichtung dadurch erhältlich ist, dass entweder Coil-beschichtetes Material oder abschnittsweise beschichtetes Material verwendet wird und die periodische Strukturierung in das Coil-beschichtete Material oder abschnittsweise beschichtete Material eingeprägt wird.

2. Metallische Flachdichtung (1) nach Anspruch 1,
**dadurch gekennzeichnet, dass**
die Dicke der Besichtung (3) im Bereich des Dichtelements (4) nur in dem Ausmaß variiert, dass sie im Bereich der Vertiefungen (42) eine Beschichtungsdicke aufweist, die weniger als 110%, bevorzugt weniger als 105% und besonders bevorzugt weniger als 102% der Beschichtungsdicke im Bereich der Vorsprünge (41) entspricht.

3. Metallische Flachdichtung (1) nach einem der vorhergehenden Ansprüche,
**dadurch gekennzeichnet, dass**
die Dicke (HB₁, HB₂) der Beschichtung (3) auf einer der Oberflächen (11, 12) einer Dichtungslage (10) zwischen 15 und 40 µm beträgt.

4. Metallische Flachdichtung (1) nach einem der vorhergehenden Ansprüche,
**dadurch gekennzeichnet, dass**
die periodische Strukturierung über mindestens 80% des Umfangs der Durchgangsöffnung (20), bevorzugt über den gesamten Umfang der Durchgangsöffnung (20) mindestens zwei Perioden aufweist.

5. Metallische Flachdichtung (1) nach einem der vorhergehenden Ansprüche,
**dadurch gekennzeichnet, dass**
die erste Dichtungslage (10)
- nur auf einer ihrer Oberflächen (11, 12) beschichtet ist; oder
- auf beiden Oberflächen (11, 12) mit gleichen Beschichtungsdicken (HB₁, HB₂) beschichtet ist; oder
- auf beiden Oberflächen (11, 12) mit unterschiedlichen Beschichtungsdicken (HB₁, HB₂) beschichtet ist.

6. Metallische Flachdichtung (1) nach einem der vorhergehenden Ansprüche,
**dadurch gekennzeichnet, dass**
die erste Dichtungslage (10) auf mindestens einer ihrer Oberflächen (11, 12) vollständig oder nur partiell beschichtet ist.

7. Metallische Flachdichtung (1) nach einem der vorhergehenden Ansprüche,
**dadurch gekennzeichnet, dass**
die periodische Strukturierung mindestens zwei Perioden einer Welle über den gesamten Umfang einer Durchgangsöffnung (20) umfasst.

8. Metallische Flachdichtung (1) nach einem der vorhergehenden Ansprüche,
**dadurch gekennzeichnet, dass**
die Gesamtdehnung der metallischen Dichtungslage (10) im Bereich der periodischen Strukturierung mindestens 30%, bevorzugt mindestens 35% und ganz besonders bevorzugt mindestens 40% beträgt.

9. Metallische Flachdichtung (1) nach einem der vorhergehenden Ansprüche,
**dadurch gekennzeichnet, dass**
die periodische Strukturierung so ausgebildet ist, dass die Dicke (HM₄₃) der metallischen Lage (10) im Übergangsbereich (43) zwischen einem Vorsprung (41) und einer benachbarten Vertiefung (42) verglichen mit der Dicke (HM₄₁) an einem Vorsprung (41) oder an einer Vertiefung (42) reduziert ist, bevorzugt die Dicke (HM₄₃) der metallischen Lage (10) aller Übergangsbereiche (43) reduziert ist gegenüber der Dicke (HM₄₁) an einem Vorsprung (41) oder an einer Vertiefung (42) und besonders bevorzugt die Dicke (HM₄₃) der metallischen Lage (10) im mindestens einen Übergangsbereich (43) zwischen einem Vorsprung (41) und einer benachbarten Vertiefung (42) um mindestens 8%, bevorzugt um mindestens 10%, besonders bevorzugt um mindestens 13% und insbesondere um mindestens 15% reduziert ist.

10. Metallische Flachdichtung (1) nach einem der vorhergehenden Ansprüche,
**dadurch gekennzeichnet, dass**
die erste metallische Lage (10) aus einem Federstahl, federharten Stahl oder gehärteten Stahl, aus einem Kohlenstoffstahl oder einem rostfreien Stahl geformt ist.

11. Metallische Flachdichtung (1) nach einem der vorhergehenden Ansprüche,
**dadurch gekennzeichnet, dass**
die Beschichtung (3) mindestens eine der folgenden Eigenschaften aufweist:
- das Beschichtungsmaterial weist bei isolierter Betrachtung eine Shore-Härte von A90 oder mehr auf;
- sie enthält einen Binder, wobei der Binder elastomeres FPM und/oder NBR zu mindestens 50%, bevorzugt zu mindestens 65% enthält;
- sie zeigt bei einer Temperatur von bis zu 180°C, bevorzugt von bis zu 240°C, dauerhaft keine Zersetzung;
- enthält weniger als 3% Duroplaste.

12. Metallische Flachdichtung (1) nach einem der vorhergehenden Ansprüche,
**dadurch gekennzeichnet, dass**
die Vorsprünge (41) und Vertiefungen (42) im Wesentlichen konzentrisch um die mindestens eine Durchgangsöffnung (20) angeordnet sind, wobei bevorzugt die periodische Strukturierung der konzentrisch angeordneten Vorsprünge (41) und Vertiefungen (42) von einer bogenförmigen Struktur überlagert ist, und wobei besonders bevorzugt in der periodischen Strukturierung mindestens eine der folgenden Eigenschaften sich in der radialen (von a nach c) und/oder konzentrischen (von a nach d) Richtung ändert:
(a) der Abstand zwischen benachbarten Vorsprüngen (41) und/oder Vertiefungen (42);
(b) die Höhe der Vorsprünge (41) und/oder Vertiefungen (42);
(c) der Grad der Dickenreduktion (HM₄₃) der metallischen Lage (10) im Übergangsbereich (43) zwischen einem Vorsprung (41) und einer benachbarten Vertiefung (42);
(d) die Anzahl Perioden.

13. Metallische Flachdichtung (1) nach einem der vorhergehenden Ansprüche,
**dadurch gekennzeichnet, dass**
die Vorsprünge (41) und Vertiefungen (42)
- mit einem mäandrierenden Verlauf um die Durchgangsöffnung (20) herum ausgebildet sind;
- als radial verlaufende sickenförmige Strukturen ausgebildet sind, deren Periodenlänge in Radialrichtung maximal dem fünffachen ihrer Periodenlänge P entspricht; oder
- sind napfförmig ausgebildet und bilden in ihrer Gesamtheit ein Schachbrett- oder Honigwaben-Muster.

14. Metallische Flachdichtung (1) nach einem der vorhergehenden Ansprüche,
**dadurch gekennzeichnet, dass**
die periodische Strukturierung das einzige sich konzentrisch um die Durchgangsöffnung (20) erstreckende Dichtelement (4) ist.

15. Metallische Flachdichtung (1) nach einem der Ansprüche 13 oder 14,
**dadurch gekennzeichnet, dass**
die Höhe der Vertiefungen sich von der Höhe (HP) der Vorsprünge (41) relativ zu den Oberflächen (11, 12) der Dichtung (10) im unstrukturierten Bereich unterscheidet.

16. Metallische Flachdichtung (1) nach einem der vorhergehenden Ansprüche,
**dadurch gekennzeichnet, dass**
sie mehrere Dichtungslagen (10, 18, 19), bevorzugt zwei Dichtungslagen, welche zumindest im Bereich ihrer periodischen Strukturierung auf mindestens einer ihrer Oberflächen (11, 12) beschichtet sind.

17. Metallische Flachdichtung (1) nach einem der vorhergehenden Ansprüche,
**dadurch gekennzeichnet, dass**
sie sich flach erstreckt, aber als ganzes eine konische oder sphärische Form aufweist.

18. Metallische Flachdichtung (1) nach einem der vorhergehenden Ansprüche,
**dadurch gekennzeichnet, dass**
die Flachdichtung (1) eine weitere periodische Strukturierung enthält, die keine einzelne Durchgangsöffnung (20) individuell umgibt, wobei diese weitere periodische Strukturierung bevorzugt mindestens einen der folgenden Unterschiede verglichen mit der periodischen Strukturierung, die die Durchgangsöffnung (10) umgibt aufweist:
- eine reduzierte Höhe eines Vorsprungs (41) und/oder einer Vertiefung (42);
- ein zunehmender Abstand zwischen benachbarten Vorsprüngen (41) und/oder Vertiefungen (42);
- eine verminderte Dickenreduktion der metallischen Lage (10) im Übergangsbereich.

19. Metallische Flachdichtung (1) nach einem der vorhergehenden Ansprüche, nämlich eine Dichtung im Bereich eines Verbrennungsmotors oder dessen Abgasstrang, insbesondere Zylinderkopfdichtung, Abgaskrümmerdichtung oder Flanschdichtung.

20. Verfahren zum Herstellen einer metallischen Flachdichtung (1) nach einem der vorhergehenden Ansprüche,
**dadurch gekennzeichnet, dass**
die periodische Strukturierung in einen Bereich der mindestens einen Dichtungslage (10) eingeprägt ist, der vollständig beschichtet ist.

## Revendications

1. Joint plat métallique (1) avec
- au moins une tôle métallique (10)
- au moins une ouverture de passage (20) et
- un élément d'étanchéité (4) formé dans une des au moins une tôles métalliques (10),
- l'élément d'étanchéité (4) entourant complètement l'ouverture de passage (20) et étant formée comme structure périodique dans le matériau de la tôle de joint (10),
- dont la structure périodique comprend des saillies (41) et des dépressions (42) et une région de transition (43) entre les saillies (41) et les dépressions (42) et comporte au moins deux périodes s'étendant sur au moins 70% du circonférence de l'ouverture de passage (20),
- la première tôle de joint (10) est complètement enduite au moins dans la région de la structure périodique,
**caractérisé par** ce
- que la longueur de période (P) de la structure périodique correspond au maximum à quatre fois l'épaisseur du matériau de la première tôle du joint (10),
- l'enduction comprend moins de 5% de matériau thermodurcissable,
- l'épaisseur de l'enduction (3) dans la région de l'élément d'étanchéité (4) varie seulement d'un tel dégré que dans la région des dépressions (42), il montre une épaisseur de l'enduction (HV) que correspond à moins que 120% de l'épaisseur de l'enduction dans la région des saillies (41),
- l'épaisseur (HB₁, HB₂) de l'enduction (3) dans la région non structurée ne flue,
- le joint métallique plat est obtenu en emboutissant de façon périodique
- le matériau brut, ce dernier étant préalablement enduit sous forme de rouleau ou de tronçon

2. Joint plat métallique selon la revendication 1,
**caractérisé en ce**
**que** l'épaisseur de l'enduction (3) dans la région de l'élément d'étanchéité varie seulement d'un tel dégrée que dans la région des dépressions (42) il montre un épaisseur (HV) qui est moins que 110%, de préférence moins que 105%, particulièrement préférable moins que 102% de l'épaisseur de l'enduction dans la région des saillies (41).

3. Joint plat métallique d'après une des revendications précédentes,
**caractérisé par** ce
que l'épaisseur (HB₁, HB₂) de l'enduction (3) sur au moins une des surfaces (11, 12) de la tôle de joint est entre 15 et 40 µm.

4. Joint plat métallique d'après une des revendications précédentes,
**caractérisé par** ce
que la structure périodique comprend au moins deux périodes sur au moins 80% de la circonférence de l'ouverture de passage (20), de préférence sur la circonférence complète de l'ouverture de passage (20).

5. Joint plat métallique d'après une des revendications précédentes,
**caractérisé par** ce
que la première tôle de joint
- est enduite sur seulement une de ses surfaces (11, 12),
- est enduite sur tous les deux surfaces (11, 12) avec un épaisseur d'enduction différente,
- est enduite sur tous les deux surfaces (11, 12) avec un épaisseur d'enduction identique.

6. Joint plat métallique d'après une des revendications précédentes,
**caractérisé par** ce
que la première tôle de joint est enduite complètement sur au moins une de ses surfaces (11, 12) ou est seulement partialement enduite.

7. Joint plat métallique d'après une des revendications précédentes,
**caractérisé par** ce
que la structure périodique comprend au moins deux périodes d'onde sur la circonférence complète de l'ouverture de passage (20).

8. Joint plat métallique d'après une des revendications précédentes,
**caractérisé par** ce
que la déformation totale de la tôle de joint (10) dans la région de la structure périodique est au moins 30%, de préférence au moins 35%, et de préférence au moins 40%.

9. Joint plat métallique d'après une des revendications précédentes,
**caractérisé par** ce
que la structure périodique est formée d'une telle manière que l'épaisseur (HM₄₃) de la tôle métallique (10) dans la région du transition (43) entre une saillie (41) et une dépression (42) comparé à l'épaisseur (HM₄₁) dans la région d'une saillie (41) ou d'une dépression est réduite, de préférence que l'épaisseur (HM₄₃) de la tôle métallique (10) dans tous les régions du transition (43) entre une saillie (41) et une dépression (42) comparé à l'épaisseur (HM₄₁) dans la région d'une saillie (41) ou d'une dépression est réduite, et particulièrement préférable que l'épaisseur (HM₄₃) de la tôle métallique (10) dans la région du transition (43) entre une saillie (41) et une dépression (42) est réduite par au moins 8%, de préférence par au moins 10%, de préférence par au moins 13% et en particulier par au moins 15%.

10. Joint plat métallique d'après une des revendications précédentes,
**caractérisé par** ce
que la première tôle métallique est formée du acier ressort, du acier ressort écroui, du acier trempé, du acier carbonique ou du acier inoxydable.

11. Joint plat métallique d'après une des revendications précédentes,
**caractérisé par** ce
que l'enduction (3) montre au moins une des caractéristiques suivantes :
- le matériau de l'enduction dans sont état isolée montre une dureté Shore de A 90 ou plus,
- il contient un liant comprenant au moins 50%, de préférence au moins 65% de FKM élastomère et/ou de NBR élastomère,
- à une température jusqu'à 180°C, de préférence jusqu'à 240 °C durablement ne montre aucune décomposition,
- comprend moins que 3% des thermodurcissables

12. Joint plat métallique d'après une des revendications précédentes,
**caractérisé par** ce
que les saillies (41) et les dépressions (42) sont formées essentiellement concentriques autour du au moins une ouverture de passage (20), et la structure périodique des saillies (41) et dépressions (42) concentriques est superposée par une structure d'arceau, dont de préférence dans la structure périodique une des propriétés suivantes se modifie dans la direction radiale (de a à c) ou concentrique (de a à d) :
(a) la distance entre des saillies (41) et/ou dépressions voisines,
(b) l'épaisseur des saillies (41) et/ou dépressions,
(c) le dégré de réduction de l'épaisseur (HM₄₃) de la tôle métallique (10) dans la région de transition (43) entre des saillies (41) et des dépressions (42) voisines,
(d) le numéro des périodes.

13. Joint plat métallique d'après une des revendications précédentes,
**caractérisé par** ce
que les saillies (41) et les dépressions (42)
- sont formées avec un cours serpentant autour de l'ouverture de passage (20),
- sont formées comme des nervures s'étendant radialement, leur longueur de période en direction radiale correspondant à au maximum cinq fois leur longueur de période (P), ou
- sont formées de forme de tasse et en total forment un patron échiquier ou rayon de miel.

14. Joint plat métallique d'après une des revendications précédentes,
**caractérisé par** ce
que la structure périodique est le seul élément d'étanchéité (4) qui entoure l'ouverture de passage d'une manière concentrique.

15. Joint plat métallique d'après une des revendications 13 ou 14,
**caractérisé par** ce
que l'épaisseur des dépressions est différente de l'épaisseur (HP) des saillies (41) relatif aux surfaces (11, 12) du joint (10) dans les régions non structurées.

16. Joint plat métallique d'après une des revendications précédentes,
**caractérisé par** ce
qu'il comprend plusieurs tôles de joint (10, 18, 19), de préférence au moins deux tôles de joint enduites au moins dans la région de la structure périodique sur au moins une de ses surfaces (11, 12).

17. Joint plat métallique d'après une des revendications précédentes,
**caractérisé par** ce
qu'il s'étend platement mais en total montre une forme conique ou sphérique.

18. Joint plat métallique d'après une des revendications précédentes,
**caractérisé par** ce
que le joint (1) comprend une structure périodique additionnelle qui n'entoure aucune ouverture de passage (20) individuellement, dont la structure périodique additionnelle montre au moins une des différences suivantes comparée à la structure périodique entourant l'ouverture de passage (20) :
- une épaisseur réduite d'une saillie (41) et/ou d'une dépression,
- une distance augmentée entre des saillies (41) voisines et/ou des dépressions voisines,
- une réduction réduite de l'épaisseur de la tôle métallique dans la région de transition (41).

19. Joint plat métallique d'après une des revendications précédentes, soit joint dans la région du moteur à combustion soit de son tuyau d'échappement, en particulier joint de culasse, joint du collecteur d'échappement ou joint de bride.

20. Procédé de réalisation d'un joint plat métallique (1) d'après une des revendications précédentes, **caractérisé par** ce
que la structure périodique est emboutie dans une région du au moins une tôle du joint complètement enduite.
